# EUROPÄISCHE PATENTSCHRIFT

(11) **EP 2 616 322 B1**
(45) Veröffentlichungstag und Bekanntmachung des Hinweises auf die Patenterteilung: **09.11.2016**
(21) Anmeldenummer: 11754667.1
(22) Anmeldetag: 09.09.2011
(51) Int. Cl.: B63H 9/02

(54) **MAGNUS-ROTOR UND VERFAHREN ZUM KÜHLEN VON ELEMENTEN EINES SOLCHEN ROTORS UND/ODER ZUM ERWÄRMEN EINES ROTATIONSKÖRPERS EINES SOLCHEN ROTORS**
MAGNUS ROTOR AND METHOD FOR COOLING PARTS THEREOF AND/OR FOR WARMING THE ROTATING BODY OF SUCH A ROTOR
ROTOR À EFFET MAGNUS ET MÉTHODE POUR REFROIDIR LES ÉLÉMENTS D'UN TEL ROTOR ET/OU POUR CHAUFFER LE CORPS ROTATIF D'UN TEL ROTOR

(30) Priorität: 16.09.2010 DE 102010040911
(43) Veröffentlichungstag der Anmeldung: 24.07.2013
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2011/065623
(87) Internationale Veröffentlichungsnummer: WO 2012/034935

(56) Entgegenhaltungen:
- DE-A1-102006 025 732
- GB-A- 2 332 891
- Claus D. Wagner: "Die Segelmaschine" In: "Die Segelmaschine", 1 January 1991 (1991-01-01), Hamburg, XP055177135, pages 156-159, * the whole document *

## Beschreibung

Die Erfindung betrifft einen Magnus-Rotor. Ferner betrifft die Erfindung ein Verfahren zum Kühlen von Elementen eines Magnus-Rotors, ein Verfahren zum Erwärmen eines Rotationskörpers eines Magnus-Rotors sowie ein Schiff.

Magnus-Rotoren werden auch als Flettner-Rotoren oder Segel-Rotoren bezeichnet.

Solche Rotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Segel-, Flettner- oder Magnus-Rotor beschrieben.

Derartige Schiffsantriebe erzeugen unter dem Zusammenwirken ihrer eigenen Rotation und des sie umströmenden Windes eine Vorschubkraft zum Antreiben des Schiffes. Insbesondere können Magnus-Rotoren als Schiffsantriebe überall dort eingesetzt werden, wo ausreichende Winde herrschen.

Die Magnus-Rotoren werden im Wesentlichen als zylindrische Hohlkörper ausgeführt, sodass die Antriebseinrichtung, Tragelemente und ähnliches im Inneren des Magnus-Rotors angeordnet werden können. Eine Möglichkeit der Anordnung ist dabei, sämtliche Antriebselemente und ähnliche Aggregate in einem inneren, ortsfesten Zylinder anzuordnen, und den rotierenden Zylinder in einem mittleren oder oberen Abschnitt an dem inneren Zylinder zu lagern.

Durch den Betrieb können sich die im Inneren angeordneten Elemente und Aggregate erwärmen. Dies ist insbesondere bei der Antriebseinrichtung der Fall. Um jedoch einen optimalen Betrieb zu gewährleisten, ist es notwendig, die Elemente und Aggregate zu kühlen.

Claus D. Wagner: "Segelmaschine", in: "Die Segelmaschine", 1. Januar 1991, Hamburg, XP055177135, S. 156 - 159, zeigt einen Magnus-Rotor mit einem Träger und einem an dem Träger drehbar gelagerten Rotationskörper. Ferner weist der Magnus-Rotor eine Antriebseinrichtung zum Antreiben des Rotationskörpers auf. Der Träger weist wenigstens eine Öffnung auf, die einen Innenraum des Trägers mit einem Außenraum verbindet, so dass Luft zwischen diesen beiden Räumen hindurchtreten kann.

DE 10 2006 025 732 A1 zeigt einen Magnus-Rotor mit einem Träger, einem auf dem Träger drehbar gelagerten Rotationskörper und einer Antriebseinrichtung zum Antreiben des Rotationskörpers.

GB 2332891 A zeigt einen Magnus-Rotor mit einem Träger, einem an dem Träger drehbar gelagerten Rotationskörper und einer Antriebseinrichtung zum Antreiben des Rotationskörpers.

Der Erfindung liegt daher die Aufgabe zugrunde, einen Magnus-Rotor vorzusehen, der einen möglichst optimalen Betrieb ermöglicht.

Erfindungsgemäß wird diese Aufgabe durch einen Magnus-Rotor mit einem Träger, und einem an dem Träger drehbar gelagerten Rotationskörper und einer Antriebseinrichtung zum Antreiben des Rotationskörpers gelöst, wobei der Träger wenigstens eine Öffnung aufweist, die einen Innenraum des Trägers mit einem Außenraum derart verbindet, dass Luft zwischen diesen beiden Räumen hindurchtreten kann. Der Träger weist einen oberen und einen unteren Abschnitt auf. Jeder Abschnitt weist wenigstens eine Öffnung auf. Der obere Abschnitt ist zumindest teilweise konisch geformt und die wenigstens eine Öffnung ist in dem konisch geformten Abschnitt angeordnet. Der Magnus-Rotor weist Mittel zum Erzeugen einer Luftströmung durch die wenigstens eine Öffnung auf.

Erfindungsgemäß weist der Träger Öffnungen auf, durch die Luft von einem auf den Träger bezogenen Außenraum in einen Innenraum des Trägers eintreten kann oder Luft von einem Innenraum des Trägers in einen Außenraum bezogen auf den Träger austreten kann. Insbesondere ist dies vorteilhaft, da nicht für jedes Element (beispielsweise die Antriebseinrichtung) innerhalb des Magnus-Rotors eine separate Kühleinrichtung vorgesehen werden muss. Es reicht aus, die Öffnungen entsprechend anzuordnen, so dass eine kühlende Luftströmung entstehen kann. Dabei ist es auch vorteilhaft, dass die Öffnungen selektiv und/oder wenigstens teilweise verschließbar sind, sodass Luft jeweils in geeigneter Weise durch den Innenraum leitbar ist. So ist es auf einfache Weise möglich, die Antriebseinrichtung und weitere Elemente innerhalb des Magnus-Rotors zu kühlen und eine möglichst optimale Betriebstemperatur zu gewährleisten. Eine solche Kühlung ist darüberhinaus wesentlich kostengünstiger und wartungsärmer als eine separate Wasser- oder Ölkühlung. Zudem benötigt eine solche Art der Kühlung keine zusätzliche Energie, da keine zusätzlichen Maschinen oder Aggregate betrieben werden müssen. Vorteilhaft sind sowohl der Träger als auch der Rotationskörper im Wesentlichen zylindrisch ausgeführt.

Gemäß einer bevorzugten Ausführungsform ist der Träger im Wesentlichen innerhalb des Rotationskörpers und die Antriebseinrichtung im Wesentlichen innerhalb des Trägers angeordnet.

Indem dem Träger im Inneren des Magnus-Rotors angeordnet ist, ist es möglich, den Rotor in einem mittleren Abschnitt zu lagern. Wird der aufrechtstehende Rotor allein in einem Fußbereich gelagert, werden die herrschenden Kräfte nicht vorteilhaft abgeleitet. In einer solchen Anordnung ist der Träger im Wesentlichen vollständig von dem Rotationskörper ummantelt. Der Außenraum ist bei einer solchen Ausführungsform im Wesentlichen ein Zwischenraum zwischen Träger und Rotationskörper. Die wenigstens eine Öffnung ermöglicht nun den Luftaustausch zwischen dem Innenraum des Trägers und dem Zwischenraum. Dies ist besonders vorteilhaft, da durch die Rotation des Rotationskörpers eine Luftströmung in dem Zwischenraum hervorgerufen wird und die Luft so leicht durch die wenigstens eine Öffnung in den Innenraum des Trägers gelangt. Weiterhin ist vorteilhaft, dass die Strömung umso stärker ist, desto schneller der Rotationskörper rotiert, also desto höher die Belastung des Antriebs im Inneren des Trägers ist. So kann die Kühlung noch einfacher an die Belastung des Antriebs angepasst werden.

Gemäß einer weiteren bevorzugten Ausführungsform weist der Träger einen oberen und einen unteren Abschnitt auf, und jeder Abschnitt weist wenigstens eine Öffnung auf.

So wird erfindungsgemäß eine Strömung in dem Träger von einem unteren Abschnitt hin zu einem oberen Abschnitt erreicht. Die Begriffe unten und oben beziehen sich hierbei auf eine aufrechte Position des Magnus-Rotors, so wie er meist betrieben wird. Die Öffnungen derart anzuordnen ist besonders vorteilhaft, da erwärmte Luft stets nach oben steigt und so in einem oberen Abschnitt leicht aus dem Innenraum des Trägers austreten kann. Es ist ebenfalls vorteilhaft eine Vielzahl von Öffnungen in dem Träger anzuordnen. So tritt Luft durch eine Vielzahl von Öffnungen in den Träger ein und durch eine Vielzahl Öffnungen wieder aus. Dabei ist es vorteilhaft, selektiv einzelne Öffnungen zu verschließen, sodass die Strömung innerhalb des Trägers einstellbar ist.

In einer Ausführungsform bildet die strömende Luft einen Kreislauf. Zunächst tritt Luft aufgrund der Strömung in dem Zwischenraum durch eine Öffnung in dem unteren Abschnitt in den Träger ein. Hier wird sie durch Konvektionskühlung der Antriebseinrichtung oder anderer Elemente erwärmt. Die erwärmte Luft tritt durch eine Öffnung in dem oberen Abschnitt in den Zwischenraum aus. Hier wird die Luft wieder abgekühlt und sinkt infolge dessen innerhalb der Zwischenräume herab, um wieder durch die in dem unteren Abschnitt angeordnete Öffnung in den Träger einzutreten. In dieser Ausführungsform wird nur die Luft innerhalb des Magnus-Rotors genutzt. Der Rotationskörper ist so angeordnet, dass im Wesentlichen keine Luft von außerhalb des Rotationskörpers nach Innen dringen kann. Alternativ weist der Rotationskörper Öffnungen auf, sodass stets Frischluft in den Innenraum (bzw. Zwischenraum) gelangt.

Gemäß einer weiteren bevorzugten Ausführungsform ist der obere Abschnitt zumindest teilweise konisch geformt und die wenigstens eine Öffnung ist in dem konisch geformten Abschnitt angeordnet.

Indem die im oberen Abschnitt angeordnete wenigstens eine Öffnung in einem konischen Abschnitt angeordnet ist, wird das Austreten der Luft weiter vorteilhaft beeinflusst. Darüberhinaus hat die konische Ausführung konstruktive und kraftleitende Vorteile bei einer Lagerung des Rotationskörpers auf der Spitze des Konus.

Gemäß einer weiteren bevorzugten Ausführungsform ist in dem Bereich der wenigstens einen Öffnung ein Lamellengitter angeordnet. Die Anordnung eines Lamellengitters ist sowohl vorteilhaft in einem Bereich einer Öffnung, die als Lufteintritt fungiert, als auch in einem Bereich einer Öffnung, die als Luftaustritt fungiert. Ist ein Lamellengitter an einem Lufteintritt eingeordnet, wird das Hindurchlangen verhindert. Sollte der Magnus-Rotor in Betrieb sein, sich also der Rotationskörper in Rotation befinden, ist es beispielweise für Personal gefährlich durch die Öffnung hindurch an den Rotationskörper zu langen. Weiterhin wird die Strömung durch das Lamellengitter vorteilhaft beeinflusst und so wird die Kühlleistung verbessert. Es ist vorteilhaft das Lamellengitter abnehmbar zu gestalten. Befindet sich der Magnus-Rotor nicht in Betrieb, können die Öffnungen zu Wartungzwecken genutzt werden.

Ist das Lamellengitter in einem Bereich einer Austrittsöffnung, insbesondere einer Austrittsöffnung, die in dem konischen Abschnitt des Trägers eingebracht ist, angeordnet, dient sie einerseits dazu, den Träger zu kühlen, andererseits wird die Strömung der austretenden Luft vorteilhaft beeinflusst, sodass diese rasch abkühlt und wieder in den Träger eintreten kann.

Gemäß einer weiteren bevorzugten Ausführungsform ist die Antriebseinrichtung ein elektrischer Antrieb mit weiteren Peripherieeinrichtungen, und die Peripherieeinrichtungen sind im Wesentlichen innerhalb des Trägers angeordnet.

Indem die Antriebseinrichtung des Magnus-Rotors als elektrischer Antrieb ausgeführt ist, wird der Betrieb und die Steuerung des Magnus-Rotors wesentlich vereinfacht. So ist beispielsweise zur Änderung der Drehrichtung kein Getriebe notwendig. Allerdings benötigt ein elektrischer Antrieb weitere Peripherieeinrichtungen. Hierunter fallen beispielsweise Stromrichter, wie Wechselrichter, Steuereinrichtungen und ähnliches. Auch können innerhalb des Trägers weitere antriebsunabhängige Peripherieeinrichtungen angeordnet sein. Dies umfasst beispielsweise Heiz- oder Kühlaggregate (bspw. für Öl- oder Wasserkühlungen), Bremseinrichtungen, Messinstrumente und ähnliches. Indem die Kühlung all dieser Elemente über eine Luftströmung innerhalb des Trägers geschieht, wird die Strömung besonders vorteilhaft genutzt.

Gemäß einer weiteren bevorzugten Ausführungsform weisen die Antriebseinrichtung und/oder die Peripherieeinrichtungen Kühlrippen auf.

Vorteilhafterweise sind die Kühlrippen an dem Antrieb und/oder die Peripherieeinrichtungen so angeordnet, dass die Kühlwirkung der Luftströmung im Inneren des Trägers vorteilhaft genutzt wird. Beispielsweise können die Kühlrippen an den Gehäusen des Antriebs und/oder der Peripherieeinrichtungen angeordnet sein.

Gemäß einer weiteren bevorzugten Ausführungsform ist der Rotationskörper mittels eines Verbindungselements an dem Träger drehbar gelagert, und das Verbindungselement weist wenigstens eine Öffnung auf, die einen Zwischenraum zwischen Träger, Rotationskörper und Verbindungselement mit einem Raum oberhalb des Verbindungselements derart verbindet, dass Luft zwischen diesen beiden Räumen hindurchtreten kann.

Ist der Rotationskörper in einem mittleren oder oberen Abschnitt an dem Träger gelagert, ist hierzu ein Verbindungselement notwendig. Hier ist es vorteilhaft, dass das Verbindungselement ebenso wie der Träger Öffnungen aufweist, sodass der Außenraum bezogen auf den Träger vergrößert wird und die Kühlwirkung der Luft so vorteilhaft beeinflusst wird.

Gemäß einer weiteren bevorzugten Ausführungsform weist der Rotationskörper an einem Innenabschnitt Kühlrippen auf.

Hierdurch wird die Abkühlung der Luft in dem Außenraum, bzw. Zwischenraum vorteilhaft beeinflusst. Die Kühlung der Luft geschieht im Wesentlich mittels Konvektion an der inneren Oberfläche des Rotationskörpers. Indem der Rotationskörper Kühlrippen aufweist, wird die zur Konvektion zur Verfügung stehende Oberfläche vergrößert und so die Konvektion positiv beeinflusst. In einer alternativen Ausführungsform ist es ebenfalls vorteilhaft, wenn der Rotationskörper Öffnungen aufweist, sodass ein Luftaustausch mit einem Außenraum bezogen auf den Rotationskörper stattfindet. Dies ist vorteilhaft, wenn die erwärmte Luft innerhalb des Rotationskörpers nicht mehr ausreichend abkühlbar ist, sodass es vorteilhaft ist, diese mit Frischluft zu mischen.

Gemäß einer weiteren bevorzugten Ausführungsform weist der Magnus-Rotor Mittel zum Erzeugen einer Strömung durch die wenigstens eine Öffnung auf.

Indem solche Mittel vorgesehen werden, wird die Strömung innerhalb der Trägers weiter vorteilhaft beeinflusst. Solche Mittel umfassen beispielsweise einfache Deckel, nach Art einer Düse gestaltete Auslässe, Rohrfortsätze, Luftleitbleche und ähnliches, sodass die Luft in einer speziellen Art in den Innenraum strömt. Weiterhin umfassen diese Mittel auch Ventilatoren oder Propeller. So ist es möglich, erwärmte Luft aus dem Innenraum des Trägers abzusaugen oder Luft gezielt in den Innenraum des Trägers zu fördern.

In einer weiteren alternativen Ausführungsform wird die kalte Luft aus dem Zwischenraum mit Hilfe eines Mittels zum Erzeugen einer Strömung durch eine obere Öffnung in den Träger gefördert. So ist es möglich, gezielt Volumenströme kalter Luft in einen oberen Abschnitt des Trägers zu leiten.

Ferner wird die Aufgabe durch ein Verfahren zum Kühlen von Elementen eines Magnus-Rotors gelöst, wobei der Magnus-Rotor einen Träger, und einen an dem Träger drehbar gelagerten Rotationskörper aufweist, und
wobei der Träger wenigstens zwei Öffnungen aufweist, die einen Innenraum des Trägers mit einem Außenraum derart verbinden, dass Luft zwischen diesen beiden Räumen hindurchtreten kann, der Träger weist einen oberen und einen unteren Abschnitt auf, welche jeweils wenigstens eine Öffnung aufweisen, wobei der obere Abschnitt wenigstens teilweise konisch geformt ist und die wenigstens eine Öffnung in dem konisch geformten Abschnitt angeordnet ist, wobei der Magnus-Rotor Mittel zum Erzeugen einer Strömung durch die wenigstens eine Öffnung aufweist,
umfassend die Schritte:
- Eintreten von Luft durch eine in einem ersten, insbesondere unteren Abschnitt angeordnete Öffnung in den Innenraum des Trägers,
- Erwärmen der Luft durch Konvektionskühlung der Elemente im Innenraum des Trägers,
- Austritt der erwärmten Luft durch eine in einem zweiten, insbesondere oberen Abschnitt angeordneten Öffnung in einen Außenraum,
- Abkühlen der erwärmten Luft in dem Außenraum.

Dieses Verfahren beschreibt vorteilhaft die Kühlung der Elemente, welche innerhalb des Magnus-Rotors angeordnet sind. Diese Elemente können beispielsweise der Antriebsmotor oder ein Lager des Rotors sein. Unter den Begriff können auch weitere Elemente fallen, die innerhalb des Rotors angeordnet sind und einer Kühlung bedürfen. Kühle Luft tritt durch die eine der wenigsten zwei Öffnungen in den Innenraum des Trägers ein, und strömt dort die zu kühlenden Elemente an. Während des Umströmens der Elemente findet dann ein Wärmetauschprozess statt: Die Elemente werden gekühlt, während die umströmende Luft erwärmt wird. Diese erwärmte Luft tritt dann durch die zweite der wenigstens zwei Öffnungen aus und wird außerhalb des Trägers wieder abgekühlt. Im Anschluss kann die Luft wieder zu der ersten Öffnung gelangen und wiederum in den Innenraum eintreten. In dieser Ausführungsform nutzt das Verfahren einen im Wesentlichen geschlossenen Luftkreislauf.

In einer alternativen Ausführungsform des Verfahrens, wird zusätzlich Frischluft in den Magnus-Rotor geleitet bzw. tritt in den Magnus-Rotor ein. Dies ist vorteilhaft, sollte die Luft des im Wesentlichen geschlossenen Luftkreislaufes nicht ausreichen eine zufriedenstellende Kühlung bereitzustellen.

Ferner wird die Aufgabe durch ein Verfahren zum Erwärmen eines Rotationskörpers eines Magnus-Rotors, wobei der Magnus-Rotor einen Träger, und einen an dem Träger drehbar gelagerten Rotationskörper aufweist, und
wobei der Träger wenigstens eine Öffnung aufweist, die einen Innenraum des Trägers mit mindestens einem Außenraum derart verbinden, dass Luft zwischen diesen beiden Räumen hindurchtreten kann, der Träger weist einen oberen und einen unteren Abschnitt auf, welche jeweils wenigstens eine Öffnung aufweisen, wobei der obere Abschnitt wenigstens teilweise konisch geformt ist und die wenigstens eine Öffnung in dem konisch geformten Abschnitt angeordnet ist, wobei der Magnus-Rotor Mittel zum Erzeugen einer Strömung durch die wenigstens eine Öffnung aufweist,
umfassend die Schritte:
- Erwärmen der Luft durch Konvektionskühlung von Elementen im Innenraum des Trägers,
- Austreten der erwärmten Luft aus dem Innenraum in mindestens einen Außenraum
- Erwärmen des Rotationskörpers mittels der erwärmten Luft.

Die Luft wird durch Konvektionskühlung von Elementen, wie beispielsweise Antriebseinrichtungen, Stromrichter, Steuerungen, Wärmetauscher etc. erwärmt. Die erwärmte Luft wird durch mindestens eine Öffnung in dem Träger in einen Außenraum geleitet. Der Außenraum ist vorzugsweise ein Zwischenraum zwischen dem Träger und dem Rotationskörper. Dort erwärmt die Luft den Rotationskörper mittels Konvektion, wobei die Luft wieder abgekühlt wird. Das Erwärmen des Rotationskörpers ist vorteilhaft, da ein Schiff, welches eine Magnus-Rotor aufweist, in verschiedenen Klimazonen eingesetzt werden kann. Je nach Witterungsbedingungen kann sich Eis an dem Rotationskörper bilden. Somit ist es vorteilhaft die erwärmte Luft in den Rotationskörper zu leiten, da durch diese erwärmte Luft der Rotationskörper von innen erwärmt und dadurch das Eis, welches an seiner Außenwand anhaftet, abgetaut wird. Durch dieses Abtauen kann ein vereister Magnus-Rotor wieder betriebsfähig gemacht werden, da ein Magnus-Rotor, an dessen Rotationskörper von außen Eis anhaftet, nicht betrieben werden sollte. So kann das anhaftende Eis eine erhebliche zusätzliche Masse darstellen, die zusätzlich angetrieben werden müsste und die Effizienz des Magnus-Rotorantriebs verschlechtert. Ferner kann das Eis unsymmetrisch an der Außenwand anhaften und hierdurch eine Unwucht erzeugen, die den Betrieb beeinträchtigen oder unmöglich machen kann. Auch besteht die Gefahr, dass beim Betrieb anhaftendes Eis von der Außenwand des Magnus-Rotors gelöst und von diesem weg geschleudert wird, wodurch die Umgebung durch die weggeschleuderten Eisteile gefährdet werden kann. Daher ist es erforderlich, aus Sicherheitsgründen und zur Wiederherstellung des Magnus-Rotor-Betriebs eine Möglichkeit vorzusehen, einen vereisten Magnus-Rotor schnellstmöglich abtauen zu können.

Ferner wird die Aufgabe durch ein Schiff mit mindestens einem Magnus-Rotor gelöst, wobei der Magnus-Rotor nach einer der oben beschriebenen bevorzugten Ausführungsformen ausgeführt ist.

Die Erfindung wird nachstehend anhand eines Ausführungsbeispiels unter Bezugnahme auf die beiliegenden Zeichnungen beschrieben. Es zeigen:
- Fig. 1: eine perspektivische Ansicht eines Schiffes mit mehreren Magnus-Rotoren;
- Fig. 2: eine schematische Darstellung einer perspektivischen Darstellung eines Magnus-Rotors;
- Fig. 3: eine detaillierte Darstellung einer schematischen Seitenansicht des MagnusRotors;
- Fig. 4: eine schematische Darstellung einer vereinfachten Seitenansicht des Magnus-Rotors mit einer Nabe zwischen Träger und Rotationskörper;
- Fig. 5: eine schematische Darstellung einer Draufsicht auf die Nabe eines Magnus-Rotors; und
- Fig. 6: eine schematische Darstellung einer Draufsicht auf den Träger eines Magnus-Rotors.

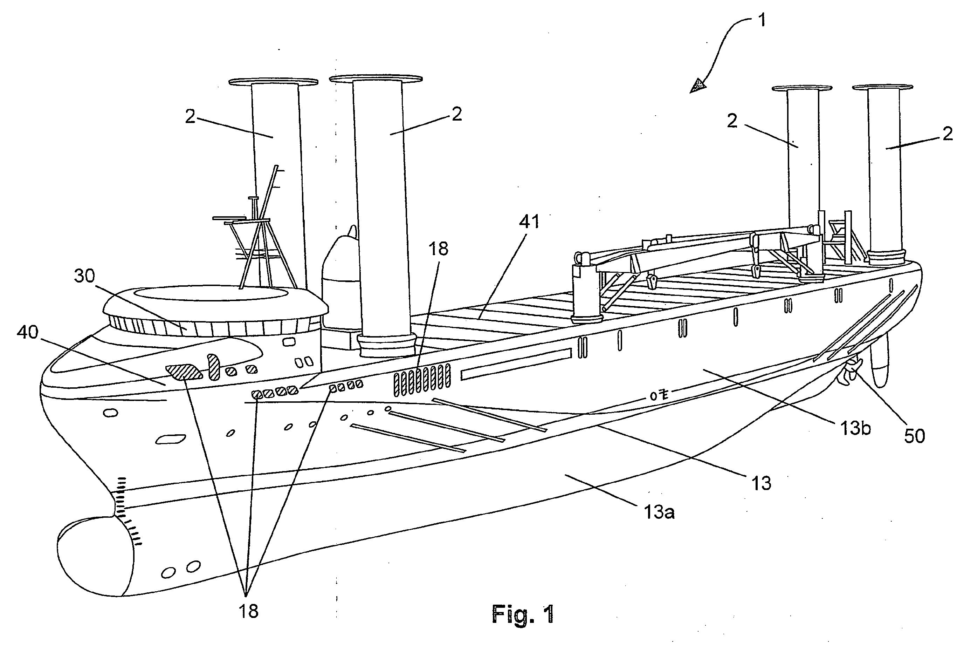

In Fig. 1 weist das Schiff 1 mehrere Magnus-Rotoren 2 auf. Das Schiff 1 weist ferner einen Rumpf 13, bestehend aus einem Unterwasserbereich 13a und einem Überwasserbereich 13b auf. Ferner hat das Schiff 1 vier Magnus-Rotoren 2 bzw. Flettner-Rotoren 2, welche an den vier Ecken des Rumpfes angeordnet sind. Die vier Magnus-Rotoren 2 stellen hierbei windbetriebene Antriebe für das erfindungsgemäße Schiff 1 dar. Das Schiff 1 weist ein im Vorschiff angeordnetes Deckshaus 40 mit einer Brücke 30 auf. Das Schiff 1 weist unter Wasser eine Schraube 50 bzw. einen Propeller 50 auf. Ferner sind in dem Rumpf 13 Fenster- und Lüftungsöffnungen 18 angeordnet. Für eine verbesserte Manövrierfähigkeit kann das Schiff 1 ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Unterkünfte, Kombüse, Provianträume, Messen usw. sind im Deckshaus 40 angeordnet. Hierbei weisen das Deckshaus 40, die Brücke 30 sowie alle Aufbauten oberhalb des Wetterdecks 41 eine aerodynamische Formgebung auf, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren und eine aerodynamische Formgebung zu erreichen, werden möglichst wenige Aufbauten vorgesehen.

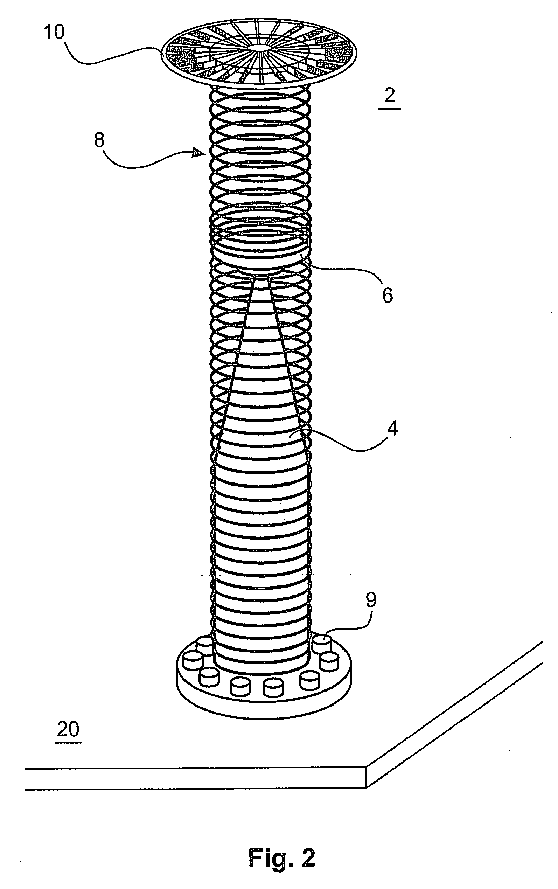

Die Magnus-Rotoren 2 sind in den Fig. 2 bis 4 genauer dargestellt.

Der Magnus-Rotor 2 gemäß Fig. 2 weist einen oberen Rotationskörper 8 und einen unteren stehenden Teil als Träger 4 auf, die über eine Lagerung 6 miteinander verbunden sind. An dem oberen Ende des Rotationskörpers 8 ist eine Endplatte 10 an diesem angebracht. Die Endplatte 10 ist abnehmbar. Sie kann Öffnungen aufweisen, um einen Eintritt von Luft in das Innere des Rotationskörpers 8 zu ermöglichen. Der Träger 4 des Magnus-Rotors 2 ist über eine lösbare Verbindung 9 auf einer Grundplatte 20 befestigt. Hier (Fig. 2) ist diese lösbare Verbindung 9 als Schraubverbindung ausgeführt. Ebenso können Bolzen zum Einsatz kommen. Soweit der Magnus-Rotor 2 z.B. auf dem Deck eines Schiffes 1 oder Ähnlichem angebracht ist, ist eine entsprechende Grundplatte 20 zur Befestigung des Trägers 4 nicht erforderlich, da diese von dem Schiffsdeck oder Ähnlichem selbst gebildet wird. Der Träger 4 ist hier (Fig. 2) im Inneren des Magnus-Rotors 2 angeordnet. Auf diesem Träger 4 rotiert der obere Rotationskörper 8 des Magnus-Rotors 2 unter Vermittlung durch eine Lagerung 6. Diese Lagerung 6 kann ein bekanntes Wälzlager oder jede andere geeignete Ausführung eines Lagers sein.

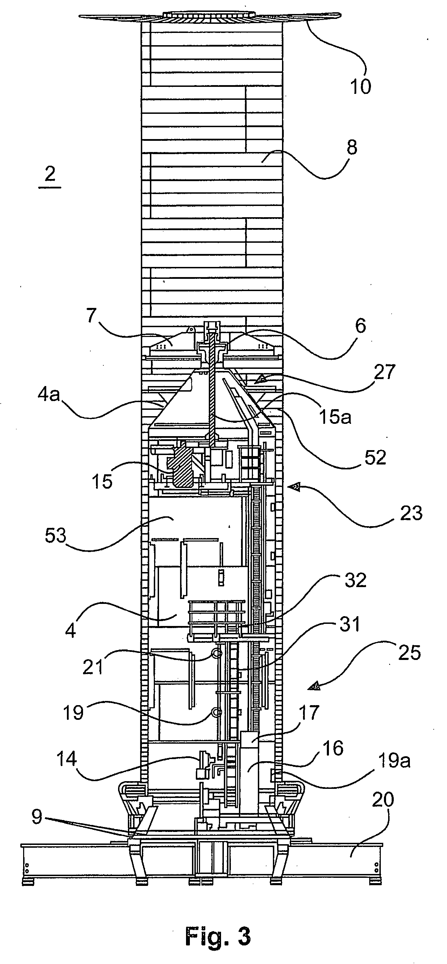

Die Öffnungen 4a, 19, 19a, 21 in dem Träger sind in Fig. 3 zu erkennen. Im Inneren des Magnus-Rotors 2 (Fig. 3) sind eine Antriebseinrichtung 15 zum Antreiben, d.h. zum in Rotation Versetzen, des Rotationskörpers 8 des Magnus-Rotors 2, sowie eine Steuerung 16 zum Steuern der Antriebseinrichtung 15 und ein Wechselrichter 17 zum Speisen der Antriebseinrichtung 15 vorgesehen. Diese sind im Inneren des Trägers 4 angeordnet. Hierbei ist die Antriebseinrichtung 15 des Rotationskörpers 8 im oberen Bereich des stehenden Trägers 4 angeordnet, so dass die Antriebswelle 15a der Antriebseinrichtung 15 durch die Lagerung 6 hindurchgeführt wird. Zur Schmierung der Lagerung 6 ist eine Ölpumpe mit Ölkühlung 14 innerhalb des Trägers 4 angeordnet. Der obere Rotationskörper 8 ist über eine Nabe 7 mit der Antriebswelle 15a verbunden. Der Magnus-Rotor 2 ist mittels Bolzen oder Schrauben 9 auf der Grundplatte 20 oder einem Schiffsdeck oder dergleichen montiert. Der Magnus-Rotor 2 weist den innenliegenden Träger 4, die Lagerung 6, den oberen Rotationskörper 8 sowie die Endplatte 10 auf, wie in Fig. 2 gezeigt und beschrieben.

Der Träger (Fig. 3) weist weiterhin drei Öffnungen 19, 19a, 21 in einem unteren Abschnitt auf. Diese können von einer Leiter 31 oder einer Service-Plattform 32 aus erreicht werden. Die Öffnungen 19, 19a, 21 können mit einer Klappe, einem Lamellengitter oder ähnlichem verschlossen sein (hier nicht gezeigt). Sollen diese Öffnungen 19, 19a, 21 zu Wartungszwecken genutzt werden, muss die Klappe, etc. entfernt werden. Insbesondere können die Öffnungen 19, 19a, 21 zum Anbringen von Gewichten an dem Rotationskörper 8 genutzt werden. Die Gewichte dienen dazu eine mögliche Unwucht des Rotationskörpers 8 auszugleichen. Der Magnus-Rotor 2, bzw. der Träger 4 ist dazu von unten, bzw. durch die Bodenplatte 20 hindurch zu betreten.

Zum Kühlen der Ölkühlung 14, der Antriebseinrichtung 15, der Steuerung 16, des Wechselrichters 17 oder anderen Aggregaten, tritt Luft beispielsweise durch die untere Öffnung 19a in den Innenraum 53 des Trägers 4 ein. Dazu kann der Träger 4 auch eine Vielzahl an unteren Öffnungen 19a aufweisen. Die Luft strömt an den Aggregaten 14, 15, 16, 17 entlang und kühlt diese so mittels Konvektion. Die erwärmte Luft steigt dann in einen oberen Abschnitt 23 des Trägers 4 auf, wo sie durch obere Öffnungen 4a in den Zwischenraum 52 gelangt. Dort wird die Luft mittels Konvektion an dem Rotationskörper 8 abgekühlt und sinkt in dem Zwischenraum 52 hinab, um gekühlt wieder durch die untere Öffnung 19a in den Innenraum 53 einzutreten.

Die Öffnung durch die Bodenplatte 20 hindurch kann in einer alternativen Ausführungsform zusätzlich als Zuführung von Frischluft genutzt werden. So ist es möglich Luft von außerhalb des Magnus-Rotors 2 durch die Bodenplatte 20 hindurch in den Innenraum des Trägers 4 zu leiten.

Bei dem Einsatz des Magnus-Rotors 2 auf offener See ist dieser umströmt von salzhaltiger Luft. Da der Rotationskörper 8 den Zwischenraum 51, 52 nicht vollständig Luftdicht abdeckt (bspw. aufgrund der Führung an der Bodenplatte 20 oder aufgrund von Montage- oder Wartungsöffnungen in dem Rotationskörper 8), kann Seeluft in den Zwischenraum 51, 52 und so auch in den Innenraum 53 des Trägers 4 eindringen. Das Eindringen dieser salzhaltigen Luft kann an Elementen innerhalb des Trägers 4, wie beispielsweise den Wechselrichtern 17 oder der Steuerung 16, Schäden verursachen. Darüberhinaus führt salzhaltige Luft zu einer beschleunigten Korrosion des Trägers 4, der vorzugsweise aus Stahl gefertigt ist. Ebenso können weitere Teile des Magnus-Rotors 2 korrodieren. In dieser alternativen Ausführungsform wird im Wesentlichen salzfreie Frischluft in den Innenraum 53 des Trägers 4 oder einen Zwischenraum 51, 52 geleitet. Es ist vorteilhaft, den Volumenstrom dieser Frischluft so zu bemessen, dass diese durch Öffnungen in dem Magnus-Rotor 2 so austritt, dass salzhaltige Seeluft im Wesentlichen verdrängt wird und nicht in einen Zwischenraum 51, 51 oder den Innenraum 53 eintreten kann. Dazu kann in dem Zwischenraum 51, 52 und/oder dem Innenraum 53 ein Überdruck vorgesehen werden. Ferner können an Öffnungen des Magnus-Rotors 2 Filter angeordnet werden, sodass eintretende salzhaltige Luft nur gefiltert (im Wesentlichen von Salz befreit) in einen Zwischenraum 51, 52 und/oder einen Innenraum 53 eintreten kann.

Der Träger 4 weist an seinem oberen Abschnitt 23 einen konischen Abschnitt 27 auf. In dem konischen Abschnitt 27 ist ebenfalls eine Öffnung 4a angeordnet. Luft kann durch die beiden unteren Öffnungen 19, 19a, 21 in den Innenraum des Trägers 4 eintreten, dort den Ölkühler 14, die Steuerung 16, den Wechselrichter 17 und die Antriebseinrichtung 15 umströmen und somit auch kühlen und anschließend aus der oberen Öffnung 4a austreten. In dem Zwischenraum zwischen Rotationskörper 8, Träger 4 und Nabe 7 kühlt die Luft ab und sinkt in dem Zwischenraum herab. Dort kann sie wiederum in Innenraum des Trägers 4 eintreten.

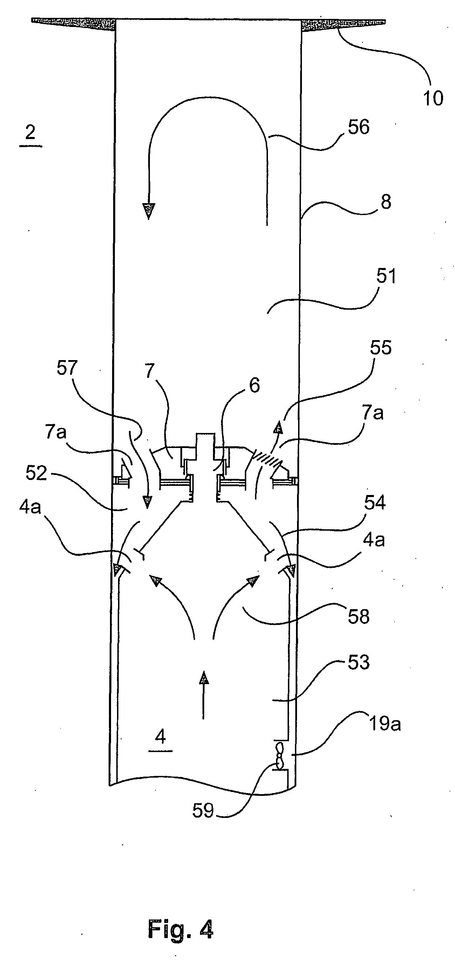

Weist die Nabe 7 ebenfalls Öffnungen 7a auf (Fig. 4), wird der Zwischenraum vergrößert und die Luft wird effektiver abgekühlt. Die Strömung der Luft wird in diesem Ausführungsbeispiel (Fig. 4) durch die Pfeile 54, 55, 56, 57 dargestellt. Gemäß diesem Ausführungsbeispiel tritt die Luft nicht nur von dem Innenraum 53 in den Zwischenraum 52 ein, sondern auch von dem Zwischenraum 52 in den Zwischenraum 51. So wird eine bessere Abkühlung der Luft, bei gleichzeitiger Erwärmung des Rotationskörpers 8 erreicht. Das Erwärmen des Rotationskörpers 8 ist vorteilhaft, da ein Schiff 1, welches einen Magnus-Rotor 2 aufweist, in verschiedenen Klimazonen eingesetzt werden kann. Je nach Witterungsbedingungen kann sich Eis an dem Rotationskörper 8 bilden. Somit ist es vorteilhaft die erwärmte Luft in den Rotationskörper 8 zu leiten, da durch diese erwärmte Luft der Rotationskörper 8 von innen erwärmt und dadurch das Eis, welches an seiner Außenwand anhaftet, abgetaut wird. Durch dieses Abtauen kann ein vereister Magnus-Rotor 2 wieder betriebsfähig gemacht werden, da ein Magnus-Rotor 2, an dessen Rotationskörper 8 von außen Eis anhaftet, nicht betrieben werden sollte. So kann das anhaftende Eis eine erhebliche zusätzliche Masse darstellen, die zusätzlich angetrieben werden müsste und die Effizienz des Magnus-Rotorantriebs verschlechtert. Ferner kann das Eis unsymmetrisch an der Außenwand anhaften und hierdurch eine Unwucht erzeugen, die den Betrieb beeinträchtigen oder unmöglich machen kann. Auch besteht die Gefahr, dass beim Betrieb anhaftendes Eis von der Außenwand des Magnus-Rotors 2 gelöst und von diesem weg geschleudert wird, wodurch die Umgebung durch die weggeschleuderten Eisteile gefährdet werden kann. Daher ist es erforderlich, aus Sicherheitsgründen und zur Wiederherstellung des Magnus-Rotor-Betriebs eine Möglichkeit vorzusehen, einen vereisten Magnus-Rotor 2 schnellstmöglich abtauen zu können.

In diesem Ausführungsbeispiel (Fig. 4) tritt erwärmte Luft 58 durch die oberen Öffnungen 4a aus dem Innenraum 53 in den Zwischenraum 52 ein. Ein Teil der Luft 54 sinkt abgekühlt in dem Zwischenraum 52 hinab. Ein anderer Teil der Luft 55 steigt durch die Öffnungen 7a in der Nabe 7 in den Zwischenraum 51 auf. Dort kühlt sie ab. Die gekühlte Luft 56, 57 sinkt durch Öffnungen 7a in der Nabe 7 in den Zwischenraum 52 hinab, um dort weiter hinab zu sinken. Die kalte Luft wird von einem Ventilator 59 oder ähnlichem durch die untere Öffnung 19a in den Innenraum 53 des Trägers gefördert und steht dort wieder zur Kühlung der Aggregate 14, 15, 16, 17 bereit. Ventilatoren oder ähnliches können an jeder Öffnung 4a, 7a, 19, 19a, 21 angeordnet sein. So ist es möglich Luft stets so zu fördern, dass sie wie gewünscht in dem Magnus-Rotor 2 zirkuliert.

Beispielhaft ist auch ein Lamellengitter 11 an einer Öffnung 7a in der Nabe 7 angeordnet. Es ist jedoch auch möglich, dass in jeder Öffnung 4a, 7a, 19, 19a, 21 ein Lamellengitter 11 angeordnet ist. Dabei muss das Gitter nicht zwangsläufig flächenbündig in der Öffnung 4a, 7a, 19, 19a, 21 angebracht sein, vorteilhaft ist jede Art der Anordnung, bei der das Gitter 11 im Wesentlichen durch- bzw. umströmt wird. Die Öffnungen 7a können so in der Nabe angeordnet sein, dass sie die Strömungsbildung vorteilhaft beeinflussen. So ist es möglich durch die Wahl eines geeigneten Winkels erwärmte Luft noch effektiver in den Zwischenraum 51, oberhalb der Nabe 7 zu leiten und gekühlte Luft noch effektiver wieder in den Zwischenraum 52 zu leiten um sie dem Innenraum 53 zuzuführen.

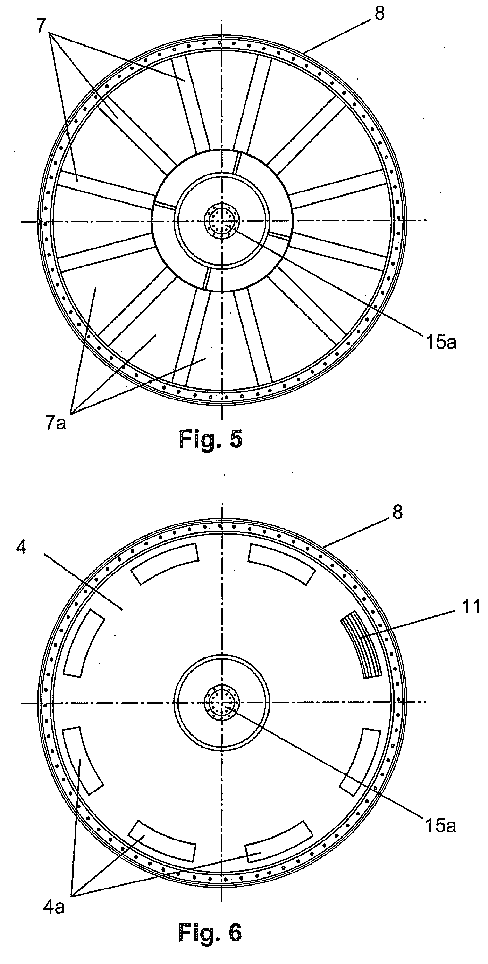

Die Nabe 7 ist in dem Ausführungsbeispiel in Fig. 5 derart ausgestaltet, dass sie die Außenwand des Rotationskörpers 8 über Rippen mit die Antriebswelle 15a verbindet. Hierdurch sind die Öffnungen 7a besonders groß ausgebildet und es wird ein nahezu durchgängiger Raum im Inneren des Rotationskörpers 8 von der Oberseite des Trägers 4 bis zur Endplatte 10 des Rotationskörpers 8 geschaffen, in dem die erwärmte Luft von den Trägeröffnungen 4a nahezu ungehindert und gradlinig senkrecht bis zur Endplatte 10 aufsteigen kann. So wird eine besonders effektive Kühlung der Luft erreicht. Die Rippen können dabei auch wie Ventilatorblätter wirken und so eine noch effektivere Strömung in dem Magnus-Rotor 2 ausbilden. Ebenso können die Öffnungen 4a in dem konischen Abschnitt 27 des Trägers 4 zu einer effektiven Abkühlung beitragen. In dem Ausführungsbeispiel (Fig. 6) sind diese nahe zu dem Rotationskörper 8 angeordnet. So wird erwärmte aufsteigende Luft in Richtung des Rotationskörpers 8 geleitet, wo sie durch Konvektion gekühlt wird. Beispielhaft ist eine Öffnung 4a mit einem Lamellengitter 11 versehen. Dieses Gitter 11 ist hier so angeordnet, dass die erwärmte Luft noch stärker gegen den Rotationskörper 8 geleitet wird.

## Patentansprüche

1. Magnus-Rotor (2), mit
einem Träger (4), und
einem an dem Träger (4) drehbar gelagerten Rotationskörper (8),
einer Antriebseinrichtung (15) zum Antreiben des Rotationskörpers (8),
wobei der Träger (4) wenigstens eine Öffnung (4a, 19, 21) aufweist, die einen Innenraum (53) des Trägers (4) mit einem Außenraum (51, 52) derart verbindet, dass Luft zwischen diesen beiden Räumen hindurchtreten kann,
**dadurch gekennzeichnet, dass**
der Träger (4) einen oberen (23) und einen unteren Abschnitt (25) aufweist, und dass jeder Abschnitt wenigstens eine Öffnung (4a, 19, 19a, 21) aufweist,
wobei der obere Abschnitt (23) zumindest teilweise konisch geformt ist, und die wenigstens eine Öffnung (4a, 19, 19a, 21) in dem konisch geformten Abschnitt (27) angeordnet ist,
wobei der Magnus-Rotor (2) Mittel zum Erzeugen einer Strömung (59) durch die wenigstens eine Öffnung (4a, 7a, 19, 19a, 21) aufweist.

2. Magnus-Rotor nach Anspruch 1,
**dadurch gekennzeichnet, dass** der Träger (4) im Wesentlichen innerhalb des Rotationskörpers (8), und die Antriebseinrichtung (15) im Wesentlichen innerhalb des Trägers (4) angeordnet sind.

3. Magnus-Rotor nach einem der vorstehenden Ansprüche,
**dadurch gekennzeichnet, dass** in dem Bereich der wenigstens einen Öffnung (4a, 19, 21) ein Lamellengitter (11) angeordnet ist.

4. Magnus-Rotor nach einem der vorstehenden Ansprüche,
**dadurch gekennzeichnet, dass** die Antriebseinrichtung (15) ein elektrischer Antrieb mit weiteren Peripherieeinrichtungen (14, 16, 17) ist, und die die Antriebseinrichtung (15) und Peripherieeinrichtungen (14, 16, 17) im Wesentlichen innerhalb des Trägers (4) angeordnet sind.

5. Magnus-Rotor nach Anspruch 4,
**dadurch gekennzeichnet, dass** die Antriebseinrichtung (15) und/oder die Peripherieeinrichtungen (14, 16, 17) Kühlrippen aufweisen.

6. Magnus-Rotor nach einem der vorstehenden Ansprüche,
**dadurch gekennzeichnet, dass** der Rotationskörper (8) mittels eines Verbindungselements (7) an dem Träger (4) drehbar gelagert ist, und
das Verbindungselement (7) wenigstens eine Öffnung (7a) aufweist, die einen Zwischenraum (52) mit einem Raum (51) oberhalb des Verbindungselements (7) derart verbindet, dass Luft zwischen diesen beiden Räumen hindurchtreten kann.

7. Magnus-Rotor nach einem der vorstehenden Ansprüche,
**dadurch gekennzeichnet, dass** der Rotationskörper (8) an einem Innenabschnitt Kühlrippen aufweist.

8. Verfahren zum Kühlen von Elementen (14, 15, 16, 17) eines Magnus-Rotors (2), wobei der Magnus-Rotor (2) einen Träger (4), und einen an dem Träger (4) drehbar gelagerten Rotationskörper (8) aufweist, und
wobei der Träger (4) wenigstens zwei Öffnungen (4a, 19, 21) aufweist, die einen Innenraum (53) des Trägers (4) mit mindestens einem Außenraum (51, 51) derart verbinden, dass Luft zwischen diesen beiden Räumen hindurchtreten kann,
wobei der Träger (4) einen oberen (23) und einen unteren Abschnitt (25) aufweist und jeder Abschnitt wenigstens eine Öffnung (4a, 19, 19a, 21) aufweist,
wobei der obere Abschnitt (23) zumindest teilweise konisch geformt ist, und die wenigstens eine Öffnung (4a, 19, 19a, 21) in dem konisch geformten Abschnitt (27) angeordnet ist,
wobei der Magnus-Rotor (2) Mittel zum Erzeugen einer Strömung (59) durch die wenigstens eine Öffnung (4a, 7a, 19, 19a, 21) aufweist,
umfassend die Schritte:
- Eintreten von Luft durch eine in einem ersten, unteren Abschnitt angeordnete Öffnung in den Innenraum (53) des Trägers (4),
- Erwärmen der Luft durch Konvektionskühlung der Elemente (14, 15, 16, 17) im Innenraum (53) des Trägers (4),
- Austritt der erwärmten Luft durch eine in einem zweiten, oberen Abschnitt angeordneten Öffnung in einen Außenraum (51, 52),
- Abkühlen der erwärmten Luft in dem Außenraum (51, 51).

9. Verfahren zum Erwärmen eines Rotationskörpers (8) eines Magnus-Rotors (2), wobei der Magnus-Rotor (2) einen Träger (4), und einen an dem Träger (4) drehbar gelagerten Rotationskörper (8) aufweist, und
wobei der Träger (4) wenigstens eine Öffnung (4a, 19, 21) aufweist, die einen Innenraum (53) des Trägers (4) mit mindestens einem Außenraum (51, 52) derart verbinden, dass Luft zwischen diesen beiden Räumen hindurchtreten kann,
wobei der Träger (4) einen oberen (23) und einen unteren Abschnitt (25) aufweist und jeder Abschnitt wenigstens eine Öffnung (4a, 19, 19a, 21) aufweist,
wobei der obere Abschnitt (23) zumindest teilweise konisch geformt ist, und die wenigstens eine Öffnung (4a, 19, 19a, 21) in dem konisch geformten Abschnitt (27) angeordnet ist,
wobei der Magnus-Rotor (2) Mittel zum Erzeugen einer Strömung (59) durch die wenigstens eine Öffnung (4a, 7a, 19, 19a, 21) aufweist,
umfassend die Schritte:
- Erwärmen der Luft durch Konvektionskühlung von Elementen (14, 15, 16, 17) im Innenraum des Trägers (4),
- Austreten der erwärmten Luft aus dem Innenraum (52) in mindestens einen Außenraum (51, 51)
- Erwärmen des Rotationskörpers (8) mittels der erwärmten Luft.

10. Frachtschiff mit einem Magnus-Rotor (2) nach einem der Ansprüche 1 bis 7.

## Claims

1. Magnus rotor (2), having
a carrier (4), and
a rotating member (8) which is rotatably supported on the carrier (4),
a drive device (15) for driving the rotating member (8), wherein the carrier (4) has at least one opening (4a, 19, 21) which connects an inner space (53) of the carrier (4) to an outer space (51, 52) in such a manner that air can pass between these two spaces,
**characterised in that**
the carrier (4) has an upper portion (23) and a lower portion (25), and **in that** each portion has at least one opening (4a, 19, 19a, 21),
wherein the upper portion (23) is at least partially conically formed and the at least one opening (4a, 19, 19a, 21) is arranged in the conically formed portion (27),
wherein the Magnus rotor (2) has means for producing a flow (59) through the at least one opening (4a, 7a, 19, 19a, 21).

2. Magnus rotor according to claim 1,
**characterised in that** the carrier (4) is arranged substantially inside the rotating member (8) and the drive device (15) is arranged substantially inside the carrier (4).

3. Magnus rotor according to either of the preceding claims,
**characterised in that** a louvre grille (11) is arranged in the region of the at least one opening (4a, 19, 21).

4. Magnus rotor according to any one of the preceding claims,
**characterised in that** the drive device (15) is an electric drive having additional peripheral devices (14, 16, 17) and the drive device (15) and peripheral devices (14, 16, 17) are arranged substantially inside the carrier (4).

5. Magnus rotor according to claim 4,
**characterised in that** the drive device (15) and/or the peripheral devices (14, 16, 17) have cooling fins.

6. Magnus rotor according to any one of the preceding claims,
**characterised in that** the rotating member (8) is rotatably supported on the carrier (4) by means of a connection element (7), and
the connection element (7) has at least one opening (7a) which connects an intermediate space (52) to a space (51) above the connection element (7) in such a manner that air can pass between these two spaces.

7. Magnus rotor according to any one of the preceding claims,
**characterised in that** the rotating member (8) has cooling fins on an inner portion.

8. Method for cooling elements (14, 15, 16, 17) of a Magnus rotor (2), wherein the Magnus rotor (2) has a carrier (4) and a rotating member (8) which is rotatably supported on the carrier (4), and
wherein the carrier (4) has at least two openings (4a, 19, 21) which connect an inner space (53) of the carrier (4) to at least one outer space (51, 52) in such a manner that air can pass between these two spaces,
wherein the carrier (4) has an upper portion (23) and a lower portion (25) and each portion has at least one opening (4a, 19, 19a, 21),
wherein the upper portion (23) is at least partially conically formed and the at least one opening (4a, 19, 19a, 21) is arranged in the conically formed portion (27),
wherein the Magnus rotor (2) has means for producing a flow (59) through the at least one opening (4a, 7a, 19, 19a, 21), comprising the steps of:
- introducing air into the inner space (53) of the carrier (4) through an opening which is arranged in a first lower portion,
- heating the air by means of convection cooling of the elements (14, 15, 16, 17) in the inner space (53) of the carrier (4),
- discharging the heated air into an outer space (51, 52) through an opening which is arranged in a second upper portion,
- cooling the heated air in the outer space (51, 52).

9. Method for heating a rotating member (8) of a Magnus rotor (2), wherein the Magnus rotor (2) has a carrier (4) and a rotating member (8) which is rotatably supported on the carrier (4), and
wherein the carrier (4) has at least one opening (4a, 19, 21) which connect(s) an inner space (53) of the carrier (4) to at least one outer space (51, 52) in such a manner that air can pass between these two spaces,
wherein the carrier (4) has an upper portion (23) and a lower portion (25) and each portion has at least one opening (4a, 19, 19a, 21),
wherein the upper portion (23) is at least partially conically formed and the at least one opening (4a, 19, 19a, 21) is/are arranged in the conically formed portion (27),
wherein the Magnus rotor (2) has means for producing a flow (59) through the at least one opening (4a, 7a, 19, 19a, 21), comprising the steps of:
- heating the air by means of convection cooling of elements (14, 15, 16, 17) in the inner space of the carrier (4),
- discharging the heated air from the inner space (52) into at least one outer space (51, 52),
- heating the rotating member (8) by means of the heated air.

10. Freight ship having a Magnus rotor (2) according to any one of claims 1 to 7.

## Revendications

1. Rotor à effet Magnus (2) avec
un support (4) et
un corps rotatif (8) monté de façon rotative sur le support (4),
un dispositif d'entraînement (15) pour entraîner le corps rotatif (8),
dans lequel le support (4) présente au moins une ouverture (4a, 19, 21) qui relie un espace intérieur (53) du support (4) à un espace extérieur (51, 52), de telle sorte que de l'air puisse pénétrer à travers ces deux espaces,
**caractérisé en ce que** le support (4) présente une partie supérieure (23) et une partie inférieure (25) et **en ce que** chaque partie présente au moins une ouverture (4a, 19, 19a, 21),
dans lequel la partie supérieure (23) est au moins partiellement de forme conique, et ladite au moins une ouverture (4a, 19, 19a, 21) est disposée dans la partie de forme conique (27), dans lequel le rotor à effet Magnus (2) présente des moyens pour produire un écoulement (59) à travers ladite au moins une ouverture (4a, 7a, 19, 19a, 21).

2. Rotor à effet Magnus selon la revendication 1, **caractérisé en ce que** le support (4) est disposé essentiellement à l'intérieur du corps rotatif (8) et le dispositif d'entraînement (15) est disposé essentiellement à l'intérieur du support (4).

3. Rotor à effet Magnus selon l'une quelconque des revendications précédentes, **caractérisé en ce qu'**une grille à lamelles (11) est disposée dans la région de ladite au moins une ouverture (4a, 19, 21).

4. Rotor à effet Magnus selon l'une quelconque des revendications précédentes, **caractérisé en ce que** le dispositif d'entraînement (15) est un entraînement électrique avec d'autres équipements périphériques (14, 16, 17) et le dispositif d'entraînement (15) et les équipements périphériques (14, 16, 17) sont disposés essentiellement à l'intérieur du support (4).

5. Rotor à effet Magnus selon la revendication 4, **caractérisé en ce que** le dispositif d'entraînement (15) et/ou les équipements périphériques (14, 16, 17) présentent des nervures de refroidissement.

6. Rotor à effet Magnus selon l'une quelconque des revendications précédentes, **caractérisé en ce que** le corps rotatif (8) est monté de façon rotative sur le support (4) au moyen d'un élément de liaison (7) et l'élément de liaison (7) présente au moins une ouverture (7a) qui relie un espace intermédiaire (52) à un espace (51) au-dessus de l'élément de liaison (7) de telle sorte que de l'air puisse pénétrer entre ces deux espaces.

7. Rotor à effet Magnus selon l'une quelconque des revendications précédentes, **caractérisé en ce que** le corps de rotation (8) présente des nervures de refroidissement sur une partie intérieure.

8. Procédé pour refroidir des éléments (14, 15, 16, 17) d'un rotor à effet Magnus (2), dans lequel le rotor à effet Magnus (2) présente un support (4) et un corps rotatif (8) monté de façon rotative sur le support (4), et dans lequel le support (4) présente au moins deux ouvertures (4a, 19, 21) qui relient un espace intérieur (53) du support (4) à au moins un espace extérieur (51, 51), de telle sorte que de l'air puisse pénétrer entre ces deux espaces,
dans lequel le support (4) présente une partie supérieure (23) et une partie inférieure (25) et chaque partie présente au moins une ouverture (4a, 19, 19a, 21),
dans lequel la partie supérieure (23) est au moins partiellement de forme conique et ladite au moins une ouverture (4a, 19, 19a, 21) est disposée dans la partie de forme conique (27),
dans lequel le rotor à effet Magnus (2) présente des moyens pour produire un écoulement (59) à travers ladite au moins une ouverture (4a, 7a, 19, 19a, 21),
comprenant les étapes suivantes:
- faire pénétrer de l'air dans l'espace intérieur (53) du support (4) à travers une ouverture disposée dans une première partie inférieure,
- chauffer l'air par refroidissement par convection des éléments (14, 15, 16, 17) dans l'espace intérieur (53) du support (4),
- faire sortir l'air chauffé dans un espace extérieur (51, 52) à travers une ouverture disposée dans une deuxième partie supérieure,
- refroidir l'air chauffé dans l'espace extérieur (51, 51).

9. Procédé pour chauffer un corps rotatif (8) d'un rotor à effet Magnus (2), dans lequel le rotor à effet Magnus (2) présente un support (4) et un corps rotatif (8) monté de façon rotative sur le support (4), et dans lequel le support (4) présente au moins une ouverture (4a, 19, 21) qui relie un espace intérieur (53) du support (4) à au moins un espace extérieur (51, 52), de telle sorte que de l'air puisse pénétrer entre ces deux espaces,
dans lequel le support (4) présente une partie supérieure (23) et une partie inférieure (25) et chaque partie présente au moins une ouverture (4a, 19, 19a, 21),
dans lequel la partie supérieure (23) est au moins partiellement de forme conique et ladite au moins une ouverture (4a, 19, 19a, 21) est disposée dans la partie de forme conique (27),
dans lequel le rotor à effet Magnus (2) présente des moyens pour produire un écoulement (59) à travers ladite au moins une ouverture (4a, 7a, 19, 19a, 21),
comprenant les étapes suivantes:
- chauffer l'air par refroidissement par convection d'éléments (14, 15, 16, 17) dans l'espace intérieur du support (4),
- faire sortir l'air chauffé hors de l'espace intérieur (52) dans au moins un espace extérieur (51, 51),
- chauffer le corps rotatif (8) au moyen de l'air chauffé.

10. Cargo avec un rotor à effet Magnus (2) selon l'une quelconque des revendications 1 à 7.
